# EUROPEAN PATENT SPECIFICATION

(11) **EP 1 561 576 B1**
(45) Date of publication and mention of the grant of the patent: **24.08.2011**
(21) Application number: 05002291.2
(22) Date of filing: 03.02.2005
(51) Int. Cl.: B32B 27/00, B32B 37/10, B32B 37/12, B29D 17/00, G11B 7/26

(54) **Correcting stage, apparatus and method for laminating and laminated recording medium**
Korrigierungsstufe, Vorrichtung und Verfahren zum Laminieren und laminiertes Aufzeichnungsmedium
Stade de correction, appareil et procédé de laminage et milieu d'enregistrement stratifié

(30) Priority: 03.02.2004 JP 2004026334
(43) Date of publication of application: 10.08.2005
(73) Proprietor: Ricoh Company, Ltd., Tokyo 143-8555 (JP)
(72) Inventor: Koga, Noboru, Tokyo 143-8555 (JP)
(74) Representative: Barz, Peter

(56) References cited:
- PATENT ABSTRACTS OF JAPAN vol. 1998, no. 03, 27 February 1998 (1998-02-27) & JP 09 297941 A (MATSUSHITA ELECTRIC IND CO LTD), 18 November 1997 (1997-11-18)
- PATENT ABSTRACTS OF JAPAN vol. 2000, no. 19, 5 June 2001 (2001-06-05) & JP 2001 035020 A (SONY DISC TECHNOLOGY INC), 9 February 2001 (2001-02-09)
- PATENT ABSTRACTS OF JAPAN vol. 016, no. 216 (P-1356), 21 May 1992 (1992-05-21) & JP 04 038731 A (FUJI PHOTO FILM CO LTD), 7 February 1992 (1992-02-07)
- PATENT ABSTRACTS OF JAPAN vol. 2003, no. 12, 5 December 2003 (2003-12-05) & JP 2004 103050 A (RICOH CO LTD), 2 April 2004 (2004-04-02)
- PATENT ABSTRACTS OF JAPAN vol. 2000, no. 25, 12 April 2001 (2001-04-12) & JP 2001 232666 A (MATSUSHITA ELECTRIC IND CO LTD), 28 August 2001 (2001-08-28)

## Description

### BACKGROUND OF THE INVENTION

### Field of the Invention

The present invention relates to a correcting stage, an apparatus and method for laminating, and a laminating-type recording medium which are used for producing an optical recording medium, such as an optical disc and a magnetic recording medium.

### Description of the Related Art

With respect to the optical disc in which recorded information is read, information is recorded and erased using a laser light, a DVD (digital versatile disc) and a laser disc have been already manufactured and sold as an optical disc produced by laminating two substrates.

These optical discs comprise two substrates, and at least a reflective layer, an adhesive layer and a recording layer which are disposed between the two substrates. Examples of a material used for the substrate include a polycarbonate (PC) resin and an acryl resin (, such as a polymethyl methacrylate (PMMA)). Examples of a material used for the reflective layer include Au, Ag, Al and metal alloys thereof. Examples of a material used for the adhesive layer include a UV curing adhesive.

According to the radical UV method adopted most frequently as a laminating method for producing the conventional optical disc, the laminating-type optical disc has been produced by a process comprising a step for dropping a radical UV adhesive using a dispenser on the surface of a substrate for the information (in which information is recorded and which comprises a recording layer and a reflective layer) at several concentric circles of the substrate disc, a step for putting a substrate for the cover (which is a transparent unit playing a role of protecting the substrate for the information) on the substrate for the information, thereby forming a composite of the substrate for the information and the substrate for the cover, a step for rotating the composite at a specified r.p.m. and for a specified period to removing a surplus amount of the adhesive and a step for curing the UV adhesive by subjecting the composite to the irradiation of a UV light.

In the radical UV method, the warpage degree of the substrate for the information is proportional to the ease or difficulty of the laminating. In other words, when the warpage degrees of the two substrates laminated to each other are the same and the two substrates are laminated to each other oppositely, a laminated recording medium produced by a balanced and flat laminating can be obtained.

However, since in the radical UV method, the warpage degree of the laminated substrates cannot be corrected, the warpage degree (R-tilt value) becomes large, particularly after the laminating, so that a disadvantage is caused wherein many defectives are caused.

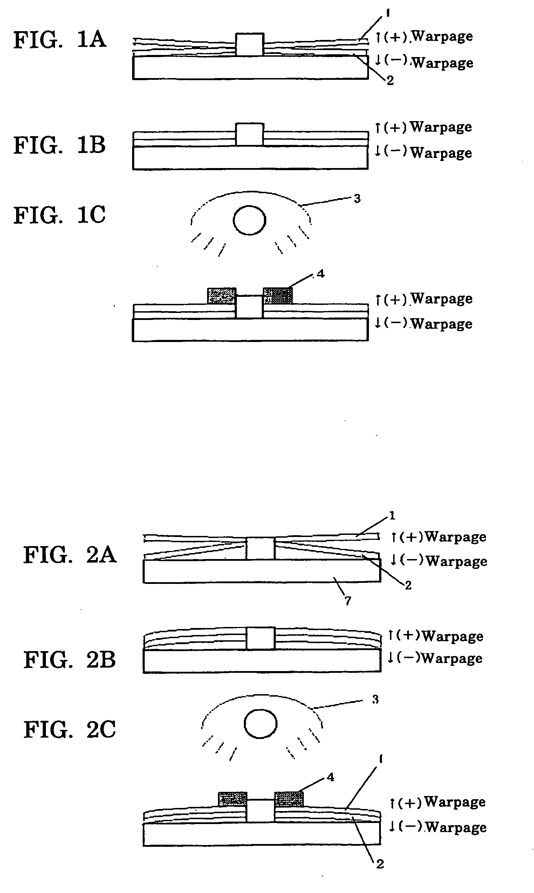

FIGs. 1A to 1C are flow diagrams showing the laminating step for producing a conventional DVD-ROM. FIG. 1A shows a step in which a substrate is put on the stage and the substrate is coated with an adhesive. FIG. 1B shows a step in which the substrate coated with an adhesive is rotated to dispose an adhesive layer on the substrate. FIG. 1C shows a step in which the adhesive layer on the substrate is cured by irradiating a UV light. In this conventional laminating method, two substrates in which a positive warpage degree of a substrate and a negative warpage degree of another substrate are balanced, so that the laminating becomes nearest to flat, can be easily obtained, so that when a laminating table (correcting stage) has a simple mirror surface, only by balancing the warpage degrees of the two substrates, the warpage degree of the laminated substrates can be easily adjusted at an advantageous warpage degree. In FIGs. 1A and 1C, 1 indicates the substrate for the cover, 2 indicates the substrate for the information and 3 indicates a UV irradiating unit, such as a UV lamp.

Here, as a method for bringing the warpage degree near 0°, a method for pressing the laminated substrates to the mirror surface of the correcting stage by putting a weight 4 on an inner circle part of a disc surface of the laminated substrates has been conventionally adopted.

However, conventional methods cannot cope with a large change in the warpage degree of a substrate, shown in FIGs. 2A to 2C, which is due to a heat deformation of the substrate by sputtering during preparing several metallized layers on the substrate in producing a rewritable recording medium (+/- RW, RAM), or a large change in the warpage degree of a substrate, which is due to a heat deformation of the substrate caused by elevating the mold to obtain mold transfer properties of the substrate for the recording medium of Write One type (+/- R) which has a groove having a large depth to a similar level of mold transfer properties of the prototype of the substrate.

Accordingly, in producing other various discs than ROM, only the substrate for the information has a warpage of a large degree, so that the performance of such a disc is impaired. Since the warpage degree (R-tilt value) of the laminated substrates in which the warpage degree of the substrate for the information is reflected has a large negative warpage degree, it is necessary that by a correcting method, the warpage degree (R-tilt value) is controlled within an advantageous range or a range of the standard.

Examples of the method for correcting the R-tilt value include a method for causing the mirror surface of the stage 7 to adsorb the substrates at a clamped convex part (an inner circle part of the disc) of the stage by reducing the pressure of an inner circle part of the stage 7 on which the substrate is put during the light irradiation and a method of pressing the whole surface of the substrate to the mirror surface of the stage 7 by putting the weight 4 on the substrates at a clamped convex part in the inner circle part of the stage; however by these methods, while the R-tilt value can be corrected, a problem is likely to be caused wherein an acceleration of the laminating-type recording medium in the direction of the rotating axis (a degree in which each part of the surface of the laminating-type recording medium moves rapidly in the direction which is perpendicular to the standard surface of the laminating-type recording medium, i.e., a degree of the unevenness of the surface of the laminating-type recording medium) is enlarged.

Examples of the cause of such a problem include (i) a disadvantage in which a micro particle of dust having a size of about 20 µm or less or an adhesive adheres between the substrates and the stage during the adsorption between the substrates and the stage, (ii) a disadvantage in which a burr of the substrates on the stage or at an outer circle part of the stage is hardened, so that a remarkable concave is caused in the surface of the substrates, (iii) a part of the substrate is adsorbed to the surface of the substrate and another part of the substrate is not adsorbed to the surface of the substrate, so that the layer of the cured adhesive has an uneven waveform and (iv) a disadvantage in which when the mirror surface of the stage has an opening for adsorbing the substrate, the laminating-type recording medium have also a form including a form of the opening. These causes affect adversely the acceleration of the laminating-type recording medium in the direction of the rotating axis.

There was a proposal of attempting to solve the above-noted problem by a method comprising pressing the two substrates to the stage (for adsorbing) which has a surface having a ultra fine uniformity and stopping the adsorbing just before the start of the light irradiation for the curing (see Japanese Patent Application Laid-Open (JP-A) No. 09-262907). According to this proposal, however, in the case of laminating a substrate having a large R-tilt value, since at the stopping of the adsorbing, the corrected R-tilt value was likely to return to an original value, a large correcting effect could not be obtained. The R-tilt value is expressed in terms of an angle of the warpage in the direction of the radius of the disc and in the case of using a substrate having an impaired R-tilt value of a large value, the offset and the amplitude of the push-pull signal of the recording medium are affected adversely.

The above-noted acceleration of the laminating-type recording medium in the direction of the rotating axis is measured at the number of revolutions of 30 Hz (1800 rpm) as the acceleration of the recording layer in the direction which is perpendicular to the standard surface of the substrate in the range from 30 Hz to 1.5 kHz. As a result of the measurement, when a substrate having a large value of an impaired acceleration caused by an unevenness of the disc surface is used, responsibility, follow-up properties and stability of focusing servo and tracking servo are affected adversely by the above-noted impaired acceleration.

Recently, with respect to DVD having a high recording speed, to the quality of the acceleration in the direction of the rotation axes, importance is attached. According to the DVD+R/RW Orange Book, the acceleration in the direction of the rotation axes is so specified by the residual focusing/tracking error that the acceleration is required to be 2.1 m/s² or less.

Therefore, in JP-A No. 2000-215524, a device to suppress the height of the acceleration caused by the contacting of the disc surface with the stage surface by using a material having a modulus of elasticity of from 0.1 MPa to 20 MPa as a material for the mirror surface of the stage is performed. However, in spite of such a device, as a result, the acceleration in the direction of the rotation axes was more than 2.1 m/s² and it is difficult to produce stably a product in which the acceleration in the direction of the rotation axes is 2.1 m/s² or less.

Further, as is apparent from FIG. 11 in JP-A 2000-215524, an unevenness of the mirror surface having a size of 100 µm or more corresponds to the acceleration in the direction of the rotation axes of 2.1 m/s² or more and when the an unevenness has a size of 20 µm or less, the acceleration in the direction of the rotation axes is rapidly adversely affected. Thus, the acceleration in the direction of the rotation axes is rapidly adversely affected, only by invading of a dust or adhesive having a size of several µm into between the substrates and the mirror surface of the stage, by a conventional form of the stage, the ratio of a qualified product having the acceleration in the direction of the rotation axes is 2.1 m/s² or less to all of the products and the equipment operating efficiency are largely adversely affected.

Examples of the cause by which a dust attaches to the surface of the stage include a cause in which a dust attached to a substrate is transferred and moves to the surface of the stage. The size of a dust which affects adversely the production of the recording medium is several µm and the problem is the attachment of the dust during the leaving time of the substrate which is one day or more from disposing of the protective layer for stabilizing the conveyability and the R-tilt value to laminating the two substrates.
Examples of the cause by which an adhesive attaches to the surface of the stage include a cause in which the adhesive drips out of the edge of the outer circle of the disc and a cause in which during the stop of the production process caused by a trouble of a production apparatus, the adhesive drips out of the edge of the inner circle or outer circle of the disc, so that the surface of the stage is stained by the additive.

JP-A No. 2002-260301 proposes a turntable by which during laminating the two substrates for producing the optical disc through a UV curing adhesive on the turntable, the whole undersurface of the substrates is not supported, but parts of the inner circle and the outer circle of the undersurface are separately supported. By causing the difference between the height of the circle-formed supporting surface in the inner circle part and the height of the circle-formed supporting surface in the outer circle part, the laminated substrates are so deformed according to the own weight of the substrates that the substrates have a deflected form having a convex curve from the outer circle part to the inner circle part, so that to the obtained laminated substrates, a warpage in the direction opposite to the direction of a warpage of the laminated substrates in the recording medium caused during the recording of the recording medium, is beforehand imparted. Further, it is proposed that by making the above-noted difference between the heights controllable, the degree of the warpage imparted to the obtained laminated substrates can be changed. However, only by causing the difference between the above-noted heights, the obtained ability of correcting the warpage of the substrates is poor.

JP-A No. 2003-59119 proposes a laminating apparatus for producing a laminating-type optical disc in which the substrate disc is supported at the circle-formed convex parts in the inner circle part and outer circle part of the turntable. JP-A No. 2001-176158 proposes a recording and reproducing unit of the optical disc having a driving unit of a recording medium disc in which the recording medium disc is supported at the circle-formed convex parts in the inner circle part and outer circle part of the turntable. Further, JP-A No. 2003-203403 proposes a laminating apparatus for producing a laminating-type optical disc in which the substrate disc is supported only at the circle-formed convex part in the inner circle part of the turntable. However, these proposals have the same problem as the above-noted problem.

JP-A No. 9-265672 proposes a method for preventing the drip of the adhesive in the laminating apparatus in which the substrate disc is supported at the double circle-formed convex parts in the inner circle part and at the circle-formed convex parts in the outer circle part of the spinner table, as follows. The method comprises two treatments, such as a treatment with respect to the preventing the drip of the adhesive out of the outer circle part of the disc and a treatment with respect to the preventing the drip of the adhesive out of the inner circle part of the disc, wherein in the former treatment, by lessening the diameter of the spinner table than the diameter of the disc, the drip of the adhesive (which is moved to the outer circle part by the centrifugal force) out of the outer circle part of the disc onto the surface of the spinner table, is prevented and the adhesive which has leaked out of the outer circle part is sucked through a vacuum suction opening prepared at the outer circle part of the spinner table; and in the later treatment, by preparing plural vacuum suction openings in the top surface of the convex part in the inner circle part of the stage, the clogging of the suction opening caused by the vacuum-sucked adhesive is prevented. However, in this proposal, nothing with respect to the deformation by deflection of the substrate disc by the vacuum suction and a preventing treatment thereof is taken in consideration.

These techniques disclosed in JP-A Nos. 2002-260301, 2003-59119, 2001-176158, 2003-203403 and 9-265672 are mainly focused on the correcting of the warpage caused in the substrate disc. Therefore, with respect to the disadvantage in that when the adhesive is cured by UV in state where a ultra-micro dust having a size of 8 to 10 µm or an adhesive is attached between the correcting stage and the disc, the acceleration in the direction of the rotation axis of the disc is adversely affected (the form of the disc surface is changed uneven locally), nothing is taken into consideration. Further, with respect to the countermeasure to prevent the disadvantage in that an adhesive is attached to the vertical side surface of the outer circle part of the disc and is set, so that the acceleration in the direction of the rotation axis of the disc is adversely affected, the above-noted patent publications disclose and indicate nothing.

Nearest prior art document JP-A-2001-035020 discloses a method and device for manufacturing a laminated disc, including adjusting a warpage of the disc and utilizing an UV curing resin as an adhesive.

In the UV curing stage of a laminated disk, wherein two disks and at least one of which has an information recording layer in its inner surface side are stuck together by using a UV curing adhesive, the warpage of the laminated disc is adjusted to a prescribed range by controlling a supporting height of a disc inner circumferential holding part and a dist outer circumferential holding part of a disc holding device according to the result of inspection of a warpage inspection device.

### SUMMARY OF THE INVENTION

The object of the present invention is to provide a correcting stage on which the two substrates can be laminated without the impairment of the acceleration of the substrates in the direction of the rotation axis of the disc due to the attachment of a dust and a adhesive to the surface of the correcting stage, so that the acceleration of the substrates in the direction of the rotation axis of the disc of 2.1 m/s² or less after the laminating can be obtained, a laminating apparatus of the recording medium, a laminating method of the recording medium and a laminating-type recording medium. The above-noted "optical disc" includes, besides an optical recording medium, a magneto-optic recording medium (i.e., "MO").

The correcting stage according to the present invention comprises ring-formed convex parts in the inner circle part and outer circle part of the stage which support the substrates, a height controlling unit configured to control at least one of the height of the ring-formed convex part in the inner circle part and the height of the ring-formed convex part in the outer circle part and a fixing unit configured to fix the inner circle part of the substrates by pressing to correct the warpage of the substrates, wherein the radius of the height controlling unit in the outer circle part is less than the radius of the substrates.

The laminating apparatus for producing the recording medium according to the present invention comprises two substrates which are to be laminated, a coating unit configured to coat at least one of the two substrates with a UV curing adhesive, a superimposing unit configured to superimpose a substrate another substrate in such a manner that an adhesive is put between the two substrates, a removing unit configured to a surplus adhesive by which the superimposed substrates are rotated to dispose the adhesive layer by spreading the adhesive using the centrifugal force of the rotation and a surplus adhesive is removed, a curing unit configured to cure the adhesive layer by irradiating a ultraviolet light and the correcting stage according to the present invention.

The laminating method for producing the recording medium according to the present invention comprises coating at least one of the two substrates with a UV curing adhesive, superimposing a substrate on another substrate in such a manner that an adhesive is put between the two substrates, removing a surplus adhesive by which the superimposed substrates are rotated to dispose the adhesive layer by spreading the adhesive using the centrifugal force of the rotation and to remove a surplus adhesive and curing the adhesive layer by irradiating a ultraviolet light, and the laminating method uses the correcting stage according to the present invention.

The laminating-type recording medium according to the present invention is produced according to the laminating method for the recording medium according to the present invention.

According to the present invention, the substrates can be laminated without the impairment of the acceleration of the laminating-type recording medium in the direction of the rotation axis due to the attachment of a dust and an adhesive onto the surface of the correcting stage and the acceleration of the laminating-type recording medium in the direction of the rotation axis of the disc of 2.1 m/s² or less after the laminating can be obtained. In addition, according to the present invention, even if with respect to a substrate having a large R-tilt value which is not satisfactorily controlled in the molding process of the substrate, the R-tilt value of the laminating-type recording medium can be corrected to a R-tilt value in the range specified by the standard of from - 0.6° to + 0.6°. With respect to the control of the R-tilt value after the laminating, such an extremely excellent effect can be obtained that by controlling the height of the ring-formed convex part in the outer circle part according to a negative R-tilt value, the R-tilt value can be corrected to not only 0, but also a positive R-tilt value.

Therefore, according to the present invention, the yield in the production of the optical recording medium can be improved and by a slight conversion of the production apparatus with a low cost, quality variations of the product can be suppressed to a high level.

### BRIEF DESCRIPTION OF THE DRAWING

FIG. 1A schematically shows a step according to a conventional laminating method of the substrates for producing a DVD-ROM in which a substrate is put on the stage and coated with an adhesive and another substrate is superimposed on the above-noted substrate.
FIG. 1B schematically shows a step according to a conventional laminating method of the substrates for producing a DVD-ROM in which the laminated substrates are rotated together with the stage, thereby disposing the adhesive layer between the two substrates.
FIG. 1C schematically shows a step according to a conventional laminating method of the substrates for producing a DVD-ROM in which by irradiating a UV light, the adhesive layer is cured.
FIG. 2A schematically shows a step according to a conventional laminating method of the substrates for producing a RW disc or a DVD disc in which a substrate is put on the stage and coated with an adhesive and another substrate is superimposed on the above-noted substrate.
FIG. 2B schematically shows a step according to a conventional laminating method of the substrates for producing a RW disc or a DVD disc in which the laminated substrates are rotated together with the stage, thereby disposing the adhesive layer between the two substrates.
FIG. 2C schematically shows a step according to a conventional laminating method of the substrates for producing a RW disc or a DVD disc in which by irradiating a UV light, the adhesive layer is cured.
FIG. 3 schematically shows a deformation of the substrates for producing the optical disc on the stage due to the difference between an applied pressure at an inner circle part of the substrate disc and an applied pressure at an outer circle part of the substrate disc.
FIG. 4 is a schematic view showing an example of a laminating apparatus of the substrates comprising the correcting stage according to the present invention and an enlarged fragmentary sectional view thereof.
FIG. 5 is another enlarged fragmentary sectional view of a schematic view in FIG. 4 than an enlarged fragmentary sectional view in FIG. 4.
FIG. 6 schematically shows an example of a laminating apparatus comprising a correcting stage.
FIG. 7A schematically shows a step for coating a substrate with an adhesive by putting the substrate on the stage in the laminating method for producing an RW disc or a DVD disc according to the present invention.
FIG. 7B schematically shows a step for disposing the adhesive layer between the two substrates by rotating the substrates together with the stage in the laminating method for producing an RW disc or a DVD disc according to the present invention.
FIG. 7C schematically shows a step for curing the adhesive layer by irradiating a UV light in the laminating method for producing an RW disc or a DVD disc according to the present invention.
FIG. 8 is an enlarged schematic view of A part in FIG. 7C.
FIG. 9 is a chart of a measured acceleration in the direction of the rotating axis which is small (i.e., the substrates have no unevenness) which is measured with respect to a laminating-type recording medium according to the present invention.
FIG. 10 is a chart of a measured R-tilt value which is small (i.e., the substrates have no warpage) which is measured with respect to a laminating-type recording medium according to the present invention.
FIG. 11 is a schematic plan view showing an example of the laminating apparatus according to the present invention.

### DESCRIPTION OF THE PREFERRED EMBODIMENTS

### (Correcting Stage)

The correcting stage according to the present invention comprises convex parts in the inner circle part and outer circle part of the stage, a height controlling unit and a fixing unit of the inner circle part, a controlling unit of the surface pressure of the substrates, and optionally other unit. The height controlling unit can control the height of the ring-formed convex part in the outer circle part to higher or lower than the height of the ring-formed convex part in the inner circle part or can control the height of the ring-formed convex part in the inner circle part to higher or lower than the height of the ring-formed convex part in the outer circle part.

It is necessary that the ring-formed convex part in the outer circle part has a radius which is less than the radius of the substrates. More specifically, it is preferred that the ring-formed convex part in the outer circle part is formed in such a manner that the ring-formed convex part in the outer circle part has a radius which is less than the radius of the substrates by 1.5 mm or more.

By the fixing unit of the inner circle part of the substrates, the inner circle part of the substrates is pressing-fixed to the inner circle part of the stage to correct the warpage of the substrates and it is preferred that the fixing unit of the inner circle part of the substrates is attached to the stage in an attachable and detachable manner.

Preferred examples of the fixing unit of the inner circle part of the substrates include a vacuum-sucking fixing unit configured to suck the inner circle part of the substrates by vacuum and to fix the inner circle part to the convex part in the inner circle part, a weight fixing unit configured to press the inner circle part of the substrates by the weight and to fix the inner circle part of the substrates to the convex part in the inner circle part and a boss part clamping unit configured to clamp the root of the boss part of the correcting stage which is ejected higher than the substrates after pressing the inner circle part of the substrates to the convex part in the inner circle part.

By the height controlling unit, at least one of the height of the ring-formed convex part in the inner circle part and the height of the ring-formed convex part in the outer circle part is controlled and it is preferred that the height controlling unit is a ring for varying the height of the convex part in the outer circle part, and that the ring for varying the height of the convex part in the outer circle part is attached to the outer circle part of the stage in an attachable and detachable manner and the height of the ring is variable. It is also preferred that the height of the ring for varying the height of the convex part in the outer circle part is varied from a height which is lower than the height of the convex part in the inner circle part by 0.3 mm and to a height which is higher than the height of the convex part in the inner circle part by 0.3 mm.

It is preferred that the correcting stage comprises a controlling unit of the surface pressure of the substrates for correcting the substrates.

It is also preferred that the controlling unit configured to control the surface pressure of the substrates adsorbs the substrates at the convex part in the inner circle part to a vacuum adsorbing part in the inner circle part of the stage and at least one of the controlling unit of the surface pressure is equipped in the ring-formed convex part of the outer circle part of the stage.

### (Laminating Apparatus and Method for Producing Recording Medium)

The laminating apparatus for the recording medium according to the present invention comprises at least two substrates which are to be laminated, a coating unit configured to coat at least one of the two substrates with a UV curing adhesive, a superimposing unit configured to superimpose a substrate on another substrate in such a manner that an adhesive is put between the two substrates, a removing unit configured to remove a surplus adhesive by which the superimposed substrates are rotated to dispose the adhesive layer by spreading the adhesive using the centrifugal force of the rotation and a surplus adhesive is removed, a curing unit configured to cure the adhesive layer by irradiating a ultraviolet light and the correcting stage according to the present invention, and optionally other units selected properly, such as a controlling unit of above-noted units.

The laminating method for the recording medium according to the present invention comprises coating at least one of the two substrates a UV curing adhesive, superimposing a substrate on another substrate in such a manner that an adhesive is put between the two substrates, removing a surplus adhesive in which the superimposed substrates are rotated to dispose the adhesive layer by spreading the adhesive using the centrifugal force of the rotation and to remove a surplus adhesive, curing the adhesive layer by irradiating a ultraviolet light and optionally other steps selected properly, such as controlling step of above-noted steps, and the laminating method uses the correcting stage according to the present invention.

The laminating method for producing the recording medium according to the present invention can be preferably performed using the laminating apparatus for producing the recording medium according to the present invention, more specifically, the above-noted coating can be performed using the above-noted coating unit, the above-noted superimposing can be performed using the above-noted superimposing unit, the above-noted removing can be performed using the above-noted removing unit, the above-noted other steps can be performed using the above-noted other units.

### - Superimposing Step and Superimposing Unit -

The superimposing is performed by superimposing a substrate on another substrate through an adhesive in such a manner that the recording layer is disposed between the two substrates.

With respect to the form, the structure and the size, the above-noted two substrates are not restricted and may be properly selected from conventional substrates depending on the application.

A first substrate (sometimes referred to as "upper substrate" according to the disposing order) and a second substrate (sometimes referred to as "lower substrate" according to the disposing order) are respectively housed in a stack pole in the form of a laminated structure. The lower substrate comprises at least a recoding layer disposed on the lower substrate and optionally a reflective layer, a protective layer and a barrier layer which are disposed on the recording layer in this order.

The coating method of the substrate with the adhesive is not restricted and may be selected properly depending on the application. Preferred examples of the coating method include a method in which by rotating the substrate and by opening/closing the valve for injecting the adhesive, the substrate is coated with the adhesive in the form of the torus (so-called "donuts").

The adhesive is not restricted and may be properly selected depending on the application. Preferred examples of the adhesive include a UV-curing adhesive, such as a UV-curing adhesive of a radical polymerization-type and a UV-curing adhesive of a cationic polymerization-type having a low viscosity.

The method for laminating the lower substrate on the upper substrate which is coated with the adhesive is not restricted and may be properly selected from conventional methods depending on the application. Preferred examples of the method for laminating the lower substrate on the upper substrate include methods without the invading of the bubble into the adhesive layer disclosed in the patent publications, such as EP 1 288 933A (a method for laminating the substrates without the invading of the bubble into the adhesive layer, which utilizes the forced deformation of the additive by the air stream at the contacting of the adhesive with the substrate).

### - Removing Step and Removing Unit -

The removing step of a surplus adhesive is a step in which the adhesive layer is disposed by rotating the superimposed substrates not only to spread the adhesive using the centrifugal force of the rotation, but also to remove a surplus adhesive.

The removing unit is not restricted and may be properly selected depending on the application. Examples of the removing unit include a spinner. In the case of the spinner, the rotation rate of the laminated substrates is not restricted and may be properly selected depending on the application. Usually, the rotation rate of the laminated substrates is preferably from 500 rpm to 4,000 rpm.

The curing is performed by imparting the energy to the superimposed upper and lower substrates and by laminated the two substrates through the curing of adhesive layer, thereby integrating the upper and lower substrates.

Examples of the unit for curing the adhesive include a UV lamp and a UV irradiating apparatus.

The controlling is performed by controlling each of the above-noted steps and can be performed a controlling unit.

The controlling unit is not restricted so long as the controlling unit can control each of the above-noted units and may be properly selected depending on the application. Examples of the controlling unit include an instrument, such as a sequencer and a computer.

At last, by rotating the correcting stage (turntable) to convey the integrated substrates to a receiving position, by driving a conveying handler of the substrates and conveying the substrates into an examining machine for the tilt value to subject the substrates to examination for the tilt value or the appearance and by discharging the substrates, the laminating - type recording medium is produced.

A series of the flow of the laminating step in the embodiment aspect of the present invention is as noted above and by repeating the series of the flow, the laminating-type recording medium having a high quality can be efficiently produced.

### (Laminating-type Recording Medium)

The laminating-type recording medium according to the present invention is produced according to the laminating method for producing the recording medium according to the present invention.

The laminating-type recording medium is produced by laminating the above-noted two substrates through the adhesive in such a manner that the recording layer is disposed between the two substrates and optionally by comprising other layers.

In this case, examples of the laminating-type recording medium include an optical recording medium and a magneto-optical recording medium.

Examples of the optical recording medium include a recording medium only for the reproducing, such as a CD recording medium, a CD-ROM recording medium and a DVD recording medium; a recording-type recording medium, such as a CD-R recording medium and a DVD-R recording medium; and a rewritable-type recording medium, such as a CD-RW recording medium, a DVD-RW recording medium, a DVD+RW recording medium and a DVD-RAM recording medium.

Examples of the magneto-optical recording medium include a mini disc (MD) and a magneto-optical (MO) disc.

It is preferred that the acceleration in the direction of the rotation axis of the laminating-type recording medium is 2.1 m/s² or less.

It is preferred that the R-tilt value of the laminating type recording medium is an R-tilt value in the range specified by the standard of from - 0.6° to + 0.6°.

The acceleration in the direction of the rotation axis and the R-tilt value are measured using a mechanical properties measuring apparatus (manufactured and sold by Dr.Schenk GmbH; trade name: Birf-126P).

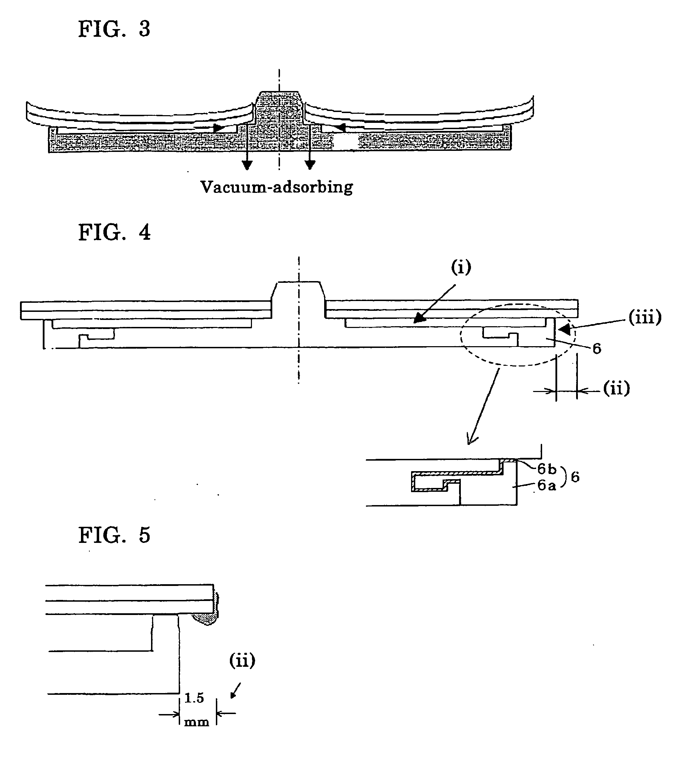

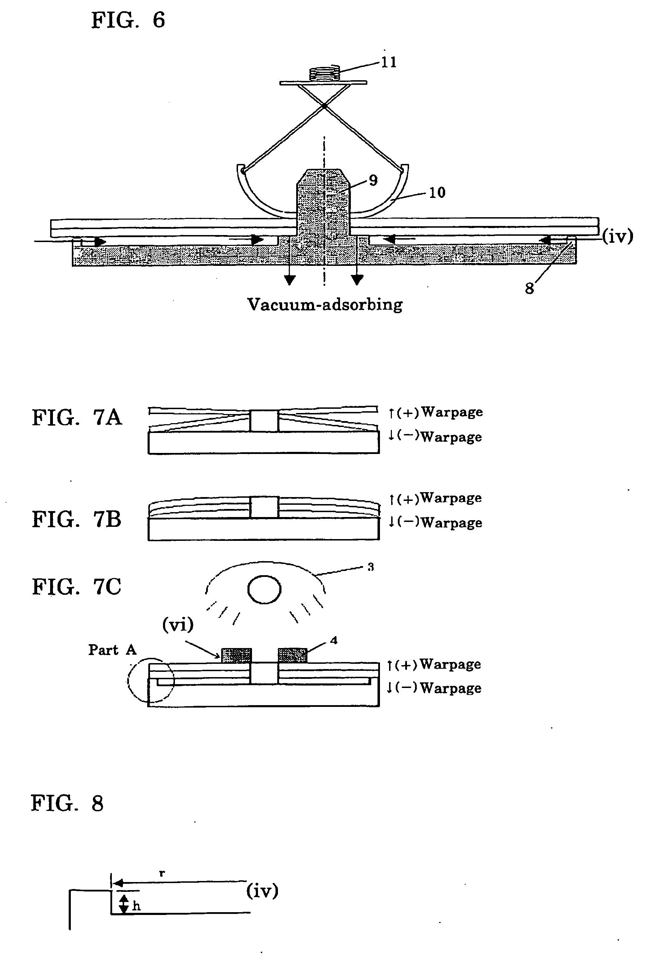

Hereinbelow, with respect to the correcting stage, the apparatus for laminating and the method for laminating, explanations are given with referring to FIG. 1A to FIG. 11. As shown in FIG. 4, steps taken for solving the above-noted task are as follows.
(I) With respect to the laminating apparatus for producing the optical disc in which the substrate for the signal recording and the substrate for the protection which have a center hole are adhesive-bonded to each other, the substrates is not supported by the entire surface of the mirror surface of the correcting stage, but supported by two ring-formed convex parts (i) of the inner and outer circle parts of the stage. It is preferred that the convex part has a flat surface at the top thereof. These countermeasures are for preventing the disadvantage in that a dust or an adhesive which have a size of several µm attaches to the surface of the correcting stage and is put between the surface of the correcting stage and the substrates, so that the acceleration in the direction of the rotation axis is impaired and exceeds the standard for the recording medium disc. In other words, since the substrates are not contacted with the whole surface of the mirror surface of the correcting stage, it can be prevented that the acceleration in the direction of the rotation axis is impaired due to the attachment of the dust and the adhesive to the surface of the correcting stage.
(II) As shown in FIGs. 4 and 5, the radius of the above-noted ring-formed convex part in the outer circle part is less than the radius of the substrates by 1.5 mm or more (ii). Thus, it can be prevented that the adhesive is attached to the surface of the stage at the convex part in the outer circle part due to the drip of the adhesive out of the outer edge of the substrates. By preventing the attachment of the adhesive to the surface of the stage at the convex part in the outer circle part, the impairment of the acceleration in the direction of the rotation axis can be prevented.
(III) The correcting stage comprises the controlling unit of the height by which at least one of the heights of the convex parts in the outer and inner circle parts can be controlled. For example, as shown in FIG. 4, at the ring-formed convex part in the outer circle part of the stage supporting the substrates, the controlling unit of the height 6 permitted to be removed which serves also as a supporter of the substrates disc is installed (iii). The controlling unit of the height 6 may comprise one unit or plural units. When the unit comprises plural units, plural units may be a series of controlling unit of the height and each of those has a different height from each other to change the height of the convex part. As shown in the enlarged fragmentary sectional view of FIG. 4, the above-noted plural units may be a combination of a main controlling unit of the height 6a and an auxiliary controlling unit of the height 6b and the auxiliary controlling unit of the height may have various heights. Such controlling unit of the height may be installed also at the convex part in the ring-formed inner circle part of the stage.
(IV) The height of the ring for varying the height of the convex part in the outer circle part is varied from a height which is lower than the height of the convex part in the inner circle part by 0.3 mm and to a height which is higher than the height of the convex part in the inner circle part by 0.3 mm. As shown in FIG. 7C and FIG. 8, the height of the ring for varying the height of the convex part in the outer circle part is so varied that the height is lower than the height of the convex part in the inner circle part by 0.3 mm, 0.2 mm or 0.1 mm or the height is higher than the height of the convex part in the inner circle part by 0.1 mm, 0.2 mm or 0.3 mm (iv). By this step, the R-tilt value becomes controllable.
(V) It is a characteristic of the present invention that in the inner circle part of the correcting stage, a fixing unit of the inner circle part of the substrates (optical disc) in which the inner circle part of the substrates is pressing-fixed to correct the warpage and the fixing unit of the inner circle part can be freely installed and removed. Examples of the fixing unit include a fixing unit by vacuum-sucking in which the inner circle part of the substrates (of an optical disc) is pressing-fixed to the mirror surface of the convex part in the inner circle part of the stage by the sucking, a fixing unit by the weight and a fixing unit by clamping the boss part of the stage.
   Hereinbelow, with respect to the fixing unit of the inner circle part of the substrates by which the inner circle part of the substrates is pressing-fixed to correct the warpage of the substrates, explanations are given.
(VI) The fixing unit by vacuum-sucking may be, for example as shown in FIG. 6, an adsorbing method by vacuum. However, examples of the fixing unit by vacuum-sucking include an adsorbing method by vacuum in which only the substrates at the convex part in the inner circle part of the stage is sucked by vacuum, thereby correcting the R-tilt value through pressing the substrates to the convex parts in the inner and outer circle parts of the stage. The adsorbing method by vacuum is a characteristic of the present invention and is performed using a structure of the convex part in the ring-formed outer circle of the correcting stage in which from the torus-formed convex part of the correcting stage, 4 pieces of a rectangular solid having a width of 2 mm is cut away at 4 points on the circumference of the correcting stage, wherein each point of 4 points is distant from another point by an angle of 90° on the circumference of the correcting stage, so that the correcting stage has a part having no convex part in the ring-formed outer circle of the correcting stage (8 in FIG. 6) at the above-noted 4 points on the circumference where the adsorbing of the substrates by vacuum cannot function and thus, only at the convex part in the inner circle part of the stage, the adsorbing by vacuum of the substrates is performed.
   As shown in FIG. 3, when the part having no convex part in the ring-formed outer circle of the correcting stage (8 in FIG. 6) which removes vacuum used for adsorbing of the substrates, is not present, by a difference between a pressure applied to the substrates at the inner circle part and a pressure applied to the substrates at the outer circle part, the substrates are deformed.
(VII) As shown in FIGs. 7A, 7B and 7C, instead of forming the above-noted part having no convex part (8 in FIG. 6), by putting the weight on the surface of the substrates at the convex part in the inner circle part of the stage during the curing of the adhesive by irradiation of the light, the substrates disc is pressed to the convex parts in the inner and outer circle parts of the stage, the correcting of the R-tilt value can be performed (vi).
(VIII) According to the present invention, as shown in FIG. 7C, as a fixing unit of the inner circle part of the substrates (optical disc) in which the inner circle part of the substrates is pressing-fixed to the inner circle part of the correcting stage for correcting the warpage of the substrates, the fixing unit of the inner circle part of the substrates (v 2) comprising the weight (4) by which the inner circle part of the substrates (optical disc) is pressing-fixed to the inner circle part of the correcting stage, thereby correcting the warpage, may be installed as a fixing unit which can be freely installed and removed.
(IX) According to the present invention, as shown in FIG. 6, as a fixing unit of the inner circle part of the substrates, a fixing unit by clamping the boss part of the stage in which after pressing the inner circle part of the substrates to the mirror-formed convex part in the inner circle part of the stage for correcting the warpage, a root of the boss part 9 (which is ejected higher than the surface of the substrates) is clamped, may be installed. The fixing unit by clamping the boss part of the stage comprises preferably a flexible material having a form like a bowl 10, a material having a form like a table which is bonded to the material 10 at the two tops of the material 10 and a spring 11 bonded to the material having a form like a table which can clamp the boss part 9 of the stage by pressing the bottom part of the material 10. The fixing unit by clamping the boss part of the stage may be used individually or in combination with the fixing unit of the inner circle part of the substrates comprising at least one of the fixing unit by vacuum-sucking and the weight 4 and when the fixing unit by clamping the boss part of the stage is used in the above-noted combination, the effect of the present invention can be exhibited more and more intensively.

Here, with respect to the method of laminating the substrates for producing the recording medium, explanations are given.

First, as shown in FIG. 7A, the substrate for the information is adsorbed by vacuum onto the surface of the correcting stage in such a manner that the recording layer in the substrate for the information which is disposed by sputtering looks upward and while rotating the correcting stage at a revolution number of several tens of rounds per minute, a UV-curing adhesive having a viscosity of 500 cp is dropped through a dispenser onto the surface of the substrate, so that the adhesive draws a circle having a radius of about 30 mm on the surface of the substrate. Next, as shown in FIG. 7B, the substrate for the cover is laminated onto the surface of the recording layer in the substrate for the information to which the adhesive is applied and the correcting stage is rotated at a revolution number of from several hundreds to several thousands of rounds per minute, thereby spreading the adhesive to the outer and inner edge of the substrates. Thereafter, as shown in FIG. 7C, the laminated substrates are transferred to the light irradiation stage.

Here, as shown in FIG. 6, the correcting stage has an opening for adsorbing by vacuum, so that by adsorbing the laminated substrates at a clamp part in the inner circle part to the correcting stage by vacuum, such as 50 kPa and by irradiating a UV light to cure the adhesive, the laminating-type recording medium can be produced.

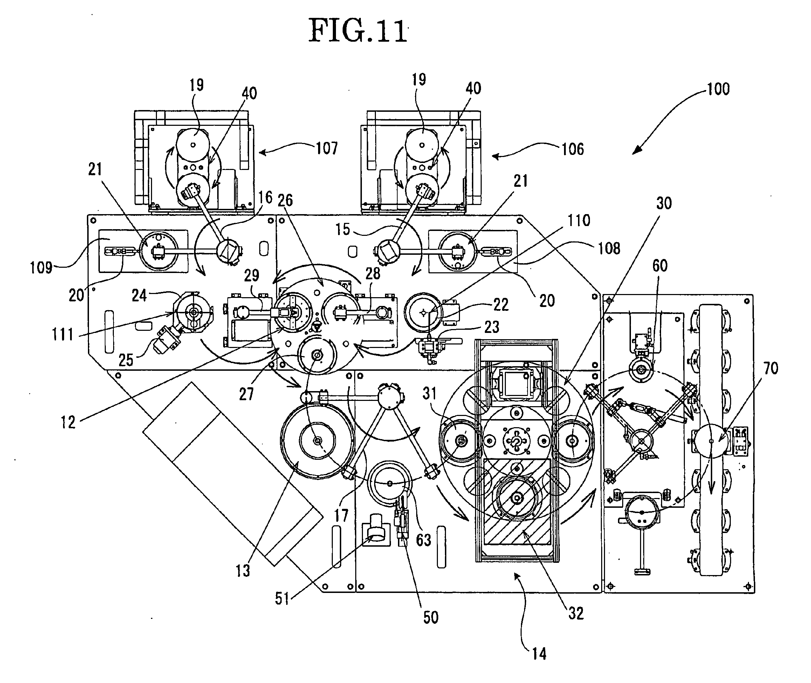

FIG. 11 is a plan view schematically showing an example of the laminating apparatus according to the present invention. The laminating apparatus 100 is a producing apparatus of the laminating-type optical recording medium produced by laminating a substrate comprising at least the recording layer (hereinbelow, referred to as "lower substrate") and a transparent substrate (hereinbelow, referred to as "upper substrate") through the adhesive layer.

As shown in FIG. 11, the laminating apparatus 100 comprises an introducing stage of the lower substrate 106, an introducing stage of the upper substrate 107, cleaning units 108 and 109, an adhesive coating part 110, a turn over unit 111, a superimposing part 12, a removing spinner 13, an odds and ends removing unit 50, a joining unit 14 and conveying arms 15, 16 and 17.

The upper and lower substrates which are to be laminated, are respectively housed in a stack pole in the form of a laminated structure and the stack pole together with the substrates is introduced into a introducing machine of the substrates 40.

The introducing stage of the lower substrate 106 and the introducing stage of the upper substrate 107 have respectively at least two sets of a substrates supporting part 19.

Cleaning units 108 and 109 has a spinner 20 and a cleaner 21 having an antistatic unit.

An adhesive coating part 110 has a disc table 22 and an adhesive coating unit 23.

The turn over unit 111 has a chuck for the outer circle part 24, the adhesive coating unit 23 and a turn over unit 25 rotating until 180°.

The superimposing part 12 comprises a turn table 26, plural sets, such as three sets of a correcting stage 27 installed on the turn table 26, a conveying arm 28 installed in a side to the adhesive coating part 110 and a conveying arm 29 installed in a side to the turn over unit 111. With respect to the detail of the correcting stage, it is as noted above.

The joining unit 14 comprises a turn table 30, for example four sets of a disc supporting part 31 and a UV irradiating unit.

The conveying arm 15 conveys the lower substrate set in the lower substrate introducing stage 106 through the cleaning unit 108 to the adhesive coating part 110 and set the substrate.

The conveying arm 16 conveys the lower substrate set in the lower substrate introducing stage 107 through the cleaning unit 109 to the turn over unit 111.

The conveying arm 17 conveys the lower and upper substrates laminated in the superimposing part 12 to the removing spinner 13, thereby determining the setting position and setting the substrates and further to the disc supporting part 31 determined as the introducing position of the joining unit 14, thereby determining the setting position and setting the substrates.

Hereinbelow, with respect to Examples of the present invention, explanations are given with referring to FIGs.

### (Example 1)

The experiment was performed using a substrate for the information (having a radius of 60.0 mm) and a substrate for the cover (having a radius of 60.0 mm), which are materials for DVD+RW, as follows.

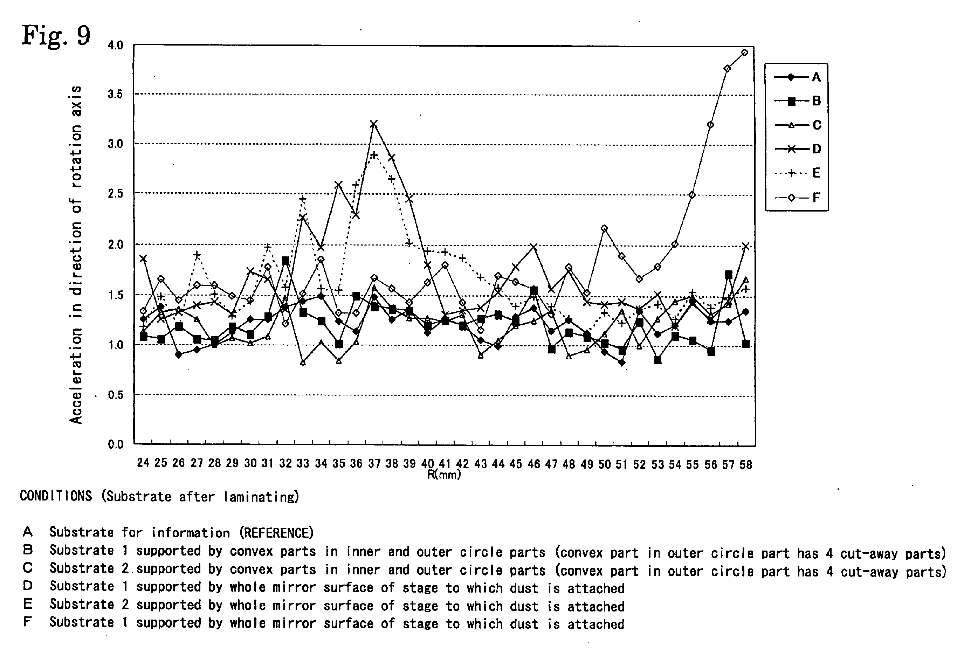

As shown in FIGs. 7A, 7B and 7C, when the laminating step and the curing step of the substrates are performed without using a correcting stage having only convex parts in the inner and outer circle parts according to the present invention, the substrates are laminated in the state in which a dust or an adhesive attached to the mirror surface of the stage invades into the substrates, so that at a surface of the substrates in which a dust or an adhesive has invaded, an extremely large unevenness is caused, which is led to an impairment of the acceleration of the substrates. By using the above-noted step (I) taken for solving the above-noted task, as shown in the graph of FIG. 9, an excellent recording medium (disc) having substantially no unevenness can be obtained.

In Example 1, the radius (R) of the ring-formed convex part in the inner circle part is 21.5 mm (R = 21.5 mm). The radius (R) of the ring-formed convex part in the outer circle part is from 57.0 mm to 57.5 mm (R = 57.0 mm to 57.5 mm). The surface of the convex part in the outer circle part of the stage, which is contacted with the substrate is rendered to having a smooth, slight circular arc-shaped surface.

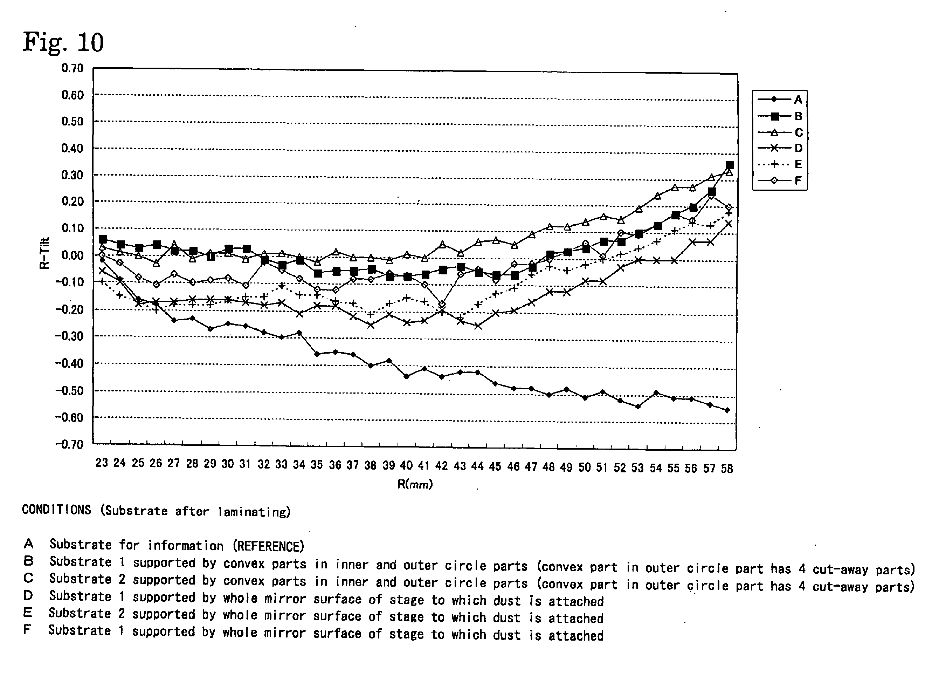

In FIG. 9, the relation between the radius of the substrate and the acceleration in the direction of the rotation axis of the produced laminating-type recording medium is shown. In FIG. 10, the relation between the radius of the substrate and is the R-tilt value of the produced laminating-type recording medium is shown.

The acceleration in the direction of the rotation axis and the R-tilt value are measured using a mechanical properties measuring apparatus (manufactured and sold by Dr.Schenk GmbH; trade name: Birf-126P).

In FIG. 9 and FIG. 10, A is the result of the measurement performed with respect to a single substrate for the information as the reference.

B and C are the results of the measurements (of two times) performed with respect to the laminating-type recording medium produced by the laminating method according to the present invention.

D and E are the results of the measurements (of two times) performed with respect to the laminating-type recording medium produced by laminating using a conventional stage on which the burr is attached.

F is the results of the measurement performed with respect to the laminating-type recording medium produced by laminating using a conventional stage on which the adhesive which has dropped out of the outer circle edge of the recording medium is attached.

### (Example 2)

The experiment was performed using a substrate for the information (having a radius of 60.0 mm) and a substrate for the cover (having a radius of 60.0 mm), which are materials for DVD+RW, as follows.

By using a correcting stage equipped with a ring-formed convex part (in the outer circle part) having a radius which is smaller than the outer radius of the substrates by 1.5 mm or more, which is according to the step (II) taken for solving the above-noted task, as shown in FIG. 5, the attachment of the adhesive to the surface of the convex part in the outer circle part of the stage can be prevented, so that the impairment of the acceleration in the direction of the rotation axis due to the invade of the adhesive can be prevented.

### (Example 3)

The experiment was performed using a substrate for the information (having a radius of 60.0 mm) and a substrate for the cover (having a radius of 60.0 mm), which are materials for DVD+RW, as follows.

With respect to Examples according to the steps (III) and (V) taken for solving the above-noted task, explanations are given below.

For obtaining an advantageous R-tilt value of the laminated substrates which have been subjected to a usual laminating and curing, an important point is that a substrate which is as flat as possible is used and two substrates are superimposed in such a manner that the superimposed substrates are as flat as possible. Since with respect to DVD-ROM, the standard for the warpage of the laminating-type recording medium is usually satisfied without taking a particular step. For example, as shown in FIGs. 1A to 1C, after the removing of the surplus adhesive by spinning the substrates, a substantially desired R-tilt value of the substrates has been obtained. Therefore, in this case, the correcting of the warpage on the mirror surface of the correcting stage is not necessary and the laminating can be easily performed.

However, with respect to +/- RW, +/- R and RAM, the substrate for the information among the two substrates suffers a heat load in a previous process and has a (-) warpage (a downward warpage, see FIG. 1A) and the laminated substrates produced using such a substrate for the information inherits the (-) warpage after the removing of a surplus adhesive by the spinning shown in FIGs. 2A to 2C. On the other hand, by pressing the substrates only at the convex part in the inner circle of the stage using the weight of 9 g to 33 g, no effect for correcting the warpage has been obtained.

Thus, as shown in FIG. 8, the correcting of the warpage to the side of (+) was performed using the stage having the convex part in the outer circle part.

The samples for the laminated substrates are produced by laminating according to the following three conditions using 10 substrates for the information and the cover all of which are confirmed to have the same R-tilt value per one condition.
(1) As the correcting stage, a mirror surface stage was used and in the inner circle part, the weight was used (a conventional method, see FIGs. 2A to 2C).
(2) As the correcting stage, a stage having in the outer circle part a ring-formed convex part having a radius of 55 mm and a height of + 0.3 mm (see the above-noted step (IV)) and in the inner circle part, the weight (the weight is 33 g, see the weight 4 in FIG. 4) was used (type 1).
(3) As the correcting stage, a stage having in the outer circle part a ring-formed convex part having a radius of 58 mm and a height of + 0.2 mm (see the above-noted step (IV)) and in the inner circle part, the weight (the weight is 33 g, see the weight 4 in FIGs. 7A to 7C according to the present invention) was used (type 2).

With respect to the produced samples, the R-tilt value was measured using a mechanical properties measuring instrument (manufactured and sold by Dr. schenk GmbH; trade name: Biref-126 P). The result of the measurement is shown in Table 1. An R-tilt value is desirably in the range specified by the standard of from - 0.6° to + 0.6°, or an angle which is as close as possible to 0.

**Table 1**

| Laminating Table | Table Size | | Radial Tilt Value after Laminating | | |
|---|---|---|---|---|---|
| | r (mm) | h (mm) | r23 (mm) | r35 (mm) | r58 (mm) |
| (1) Conventional Table | - | 0 | -0.1 | -0.2 | *from -0.7 to - 0.8 |
| (2) Table with Convex part in Outer circle part | 55 | 0.3 | *+ 0.6 | *+ 0.7 | + 0.2 |
| (3) Table with Convex part in Outer circle part | 58 | 0.2 | + 0.3 | + 0.1 | from + 0.2 to - 0.2 |

Wherein, " * " means "NG (no good)" and " r " and " h " represent respectively " radius " and " height " of the convex part in the outer circle part.

In the laminating of the substrates using the above-noted condition (3), the form of the substrates is fixed by the light irradiation curing of the substrates supported on a correcting stage having a convex part (+ 0.2 mm) in the outer circle part of the stage, it is not important whether the weight is put on the substrates or not and even if the substrates are not pressed to the convex parts in the inner and outer circle parts of the stage, an excellent R-tilt value can be obtained.

The results of Example 3 were as follows.
(1) According to a conventional method, a substrate used as a material for the laminating had a large (-) warpage at the outer circle part of the stage and the laminated substrates produced using the above-noted substrate has inherited the above-noted undesirable warpage which has not been corrected.
(2) The laminating has been performed using a stage having a convex part in the outer circle part of the stage which has the radius (r) of 55 mm (a convex part was located at a little inner point from the outer edge of the stage) and the inner circle part of the substrates was lifted up due to the height of the convex part of the stage, so that the substrates was fixed in the form of a bowl, as expressed extremely.
(3) The laminating has been performed using a stage having a convex part in the outer circle part of the stage which has the radius (r) of 58 mm and the height 0.2 mm which was improved from the height 0.3 mm in the condition (2), and the R-tilt value of in the range of from - 0.3° to + 0.3° which is much more advantageous than the range specified by the standard of from - 0.6° to + 0.6°, was obtained.

### (Example 4)

In Example 3, the correcting was performed by putting the weight on the substrates at the clamp part in the inner circle part of the stage; however, in a conventional method occasionally depending on the type of the laminating apparatus, the correcting is performed by vacuum-adsorbing the substrates at the clamp part in the inner circle part of the stage. In this case, however, when the correcting is performed according to the above-noted task-solving step (I) in which the substrates are supported by the convex parts in the inner and outer circle parts of the stage, the laminating is performed with accompanying the deformation of the substrates caused by a vacuum leaked from the clamp part in the inner circle part of the stage, wherein a deformed form is a concave form.

In Example 4, the correcting was performed according to the above-noted task-solving step (VI) in which the ring-formed convex part in the outer circle part of the stage has four cut-away parts. According to the step (VI), even if the vacuum is leaked from the clamp part in the inner circle part of the stage to the space between the stage surface and the under surface of the substrates, since the vacuum is leaked in the outer circle part during the laminating, the substrates are adsorbed by vacuum only at the inner circle part of the stage. Thus, in Example 4, a similar excellent R-tilt value to that obtained in Example 3 in which the correcting was performed by pressing the substrates with the weight could be obtained.

### (Example 5)

The experiment was performed using a substrate for DVD-ROM (having a radius of 60.0 mm).

In Examples 3 and 4, with respect to the correcting of a substrate having a large (-) warpage as a material for the laminating, explanations are given. In the case where a substrate having the R-tilt value of 0.6° or less (, such as a substrate used as a material for producing DVD-ROM) is laminated, the correcting may be performed only by controlling the height of the ring-formed convex part in the outer circle part of the stage so as to bring the R-tilt value near 0° and the vacuum-adsorbing at the clamp part in the inner circle part and the pressing for the correcting with the weight are not necessary. In Example 5, the laminating was performed with respect to a substrate having the R-tilt value of 0.6° or less without the convex parts in the inner and outer parts of the stage and the correcting by the weight and laminated substrates having the same R-tilt value and the same acceleration in the direction of the rotation axis as those of the used substrate could be obtained. The radius of the convex part in the outer diameter was 57.0 mm.

In the above-noted Examples, with respect to examples of the laminating of the substrates used for producing the optical disc, explanations are given. However, the examples should not be construed as limiting the scope of the present invention and the present invention can be applied to other types of the recording medium in which the R-tilt value of a high grade is required and also to producing methods thereof.

According to the present invention, excellent effects can be expected as follows. The laminating can be performed without the impairment of the acceleration in the direction of the rotation axis due to the attachment of the dust and the adhesive on the surface of the correcting stage and the acceleration in the direction of the rotation axis of 2.1 m/s² or less with respect to the laminated substrates can be obtained. Even if a substrate having a large R-tilt value which could not be corrected during the molding process is used for the laminating, the R-tilt value of the laminated substrates can be corrected to a value in the range specified by the standard of from - 0.6° to + 0.6°. With respect to the correcting of the R-tilt value of the laminated substrates, it is an extremely excellent effect of the present invention that by controlling the height of the convex part in the outer circle part of the stage depending on the (-) R-tilt value (an R-tilt value of (-) warpage (a downward warpage, see FIG. 1A)) of a substrate used for the laminating as a material for producing the recording medium, the (-) R-tilt value can be corrected to 0°, on the contrary to the (+) R-tilt value (an R-tilt value of (+) warpage (an upward warpage, see FIG. 1A)).

Therefore, according to the present invention, not only the yield in the production of the optical recording medium can be improved, but also by an extremely simplified conversion with a low cost of the production system, the variation of the product quality can be suppressed with a high precision.

## Claims

1. A correcting stage (8) comprising:
ring-formed convex parts (i) in an inner circle part and an outer circle part of the correcting stage which support a substrate,
a height controlling unit (6) configured to control at least one of the height of the ring-formed convex part in the inner circle part and the height of the ring-formed convex part in the outer circle part, and
a fixing unit (10,11) configured to fix the inner circle part of the substrate by pressing to correct the warpage of the substrate,
wherein the radius of the height controlling unit is less than the radius of the substrate (ii).

2. The correcting stage according to claim 1,
wherein the height controlling unit (6) controls the height of the ring-formed convex part in the outer circle part to be higher or lower than the height of the ring-formed convex part in the inner circle part.

3. The correcting stage according to claim 1,
wherein the height controlling unit (6) controls the height of the ring-formed convex part in the inner circle part to be higher or lower than the height of the ring-formed convex part in the outer circle part, or same as the height of the ring-formed convex part in the outer circle part.

4. The correcting stage according to any one of claims 1 to 3,
wherein the ring-formed convex part in the outer circle part has a radius which is less than the radius of the substrate (ii) by 1.5 mm or more.

5. The correcting stage according to any one of claims 1 to 4,
wherein the fixing unit (10,11) is attached to the correcting stage (8) in an attachable and detachable manner.

6. The correcting stage according to any one of claims 1 to 5,
wherein the fixing unit (10,11) is a vacuum-sucking fixing unit configured to suck the inner circle part of the substrate by vacuum and to fix the inner circle part of the substrate (ii) to the convex part in the inner circle part.

7. The correcting stage according to any one of claims 1 to 5,
wherein the fixing unit (10,11) is a weight fixing unit configured to press the inner circle part of the substrate by the weight and to fix the inner circle part of the substrate (ii) to the convex part in the inner circle part.

8. The correcting stage according to any one of claims 1 to 5,
wherein the fixing unit (10,11) is a boss part clamping unit configured to clamp a root of the boss part of the correcting stage which is ejected higher than the substrate after pressing the inner circle part of the substrate to the convex part in the inner circle part.

9. The correcting stage according to any one of claims 1 to 8,
wherein the height controlling unit (6) is at least one ring for varying the height of the convex part in the outer circle part.

10. The correcting stage according to claim 9,
wherein the ring (6a,6b) for varying the height of the convex part in the outer circle part is attached to the correcting stage (8) in an attachable and detachable manner.

11. The correcting stage according to any one of claims 9 to 10,
wherein the height of the ring (6a,6b) for varying the height of the convex part in the outer circle part is varied from a height which is lower than the height of the convex part in the inner circle part by 0.3 mm and to a height which is higher than the height of the convex part in the inner circle part by 0.3 mm.

12. The correcting stage according to any one of claims 1 to 11,
wherein the substrate (ii) is a substrate for the information comprising at least the recording layer on the substrate.

13. The correcting stage according to any one of claims 1 to 12,
wherein the correcting stage (8) comprises a controlling unit configured to control the surface pressure of the substrate (ii) for correcting the warpage of the substrate.

14. The correcting stage according to claim 13,
wherein the controlling unit configured to control the surface pressure of the substrate adsorbs the substrate at the convex part in the inner circle part.

15. The correcting stage according to any one of claims 13 to 14,
wherein at least one of the controlling unit configured to control the surface pressure of the substrate is positioned in the outer circle part.

16. A laminating apparatus for producing a recording medium comprising two substrates (106,107) which are to be laminated,
the apparatus comprising:
a coating unit (110) configured to coat at least one of the two substrates with a ultraviolet light-curing adhesive,
a superimposing unit (12) configured to superimpose a substrate among the two substrates on the other substrate among the two substrates such that the adhesive is put between the two substrates,
a removing unit (13.50) configured to remove a surplus adhesive by which the superimposed substrates are rotated to dispose the adhesive layer by spreading the adhesive using the centrifugal force of the rotation and a surplus adhesive is removed,
a curing unit configured to cure the adhesive layer by irradiating a ultraviolet light and
the correcting stage (8) according to any one of claims 1 to 15.

17. A laminating method for producing a recording medium comprising two substrates which are laminated, the method comprising:
coating at least one of the two substrates with a ultraviolet light-curing adhesive,
superimposing a substrate among the two substrates on the other substrate among the two substrates such that the adhesive is put between the two substrates,
removing a surplus adhesive by which the superimposed substrates are rotated not only to dispose the adhesive layer by spreading the adhesive using the centrifugal force of the rotation, but also to remove a surplus adhesive and
curing the adhesive layer by irradiating a ultraviolet light,
wherein the correcting stage according to any one of claims 1 to 15 is used.

18. A laminating-type recording medium comprising two substrates with a cured adhesive in between, wherein
the recording medium is produced by a laminating method for the recording medium according to claim 17.

19. The laminating-type recording medium according to claim 18,
wherein the recording medium has an acceleration in the direction of the rotation axis of 2.1 m/s² or less.

20. The laminating-type recording medium according to claim 18,
wherein the recording medium has an R-tilt value in the range of from - 0.6° to + 0.6°.

## Patentansprüche

1. Korrekturstation (8) umfassend:
ringförmige konvexe Teile (i) in einem inneren Kreisteil und einem äußeren Kreisteil der Korrekturstation, welche ein Substrat lagern,
eine Höhenkontrolleinheit (6), konfiguriert die Höhe des ringförmigen konvexen Teils in dem inneren Kreisteil und/oder die Höhe des ringförmigen konvexen Teils in dem äußeren Kreisteil zu steuern, und
eine Fixiereinheit (10, 11), konfiguriert den inneren Kreisteil des Substrates durch Anpressen zu fixieren, um die Durchbiegung des Substrates zu korrigieren,
wobei der Radius der Höhenkontrolleinheit geringer ist als der Radius des Substrates (ii).

2. Korrekturstation gemäß Anspruch 1, wobei die Höhenkontrolleinheit (6) die Höhe des ringförmigen konvexen Teils in dem äußeren Kreisteil so steuert, dass sie höher oder niedriger ist als die Höhe des ringförmigen konvexen Teils in dem inneren Kreisteil.

3. Korrekturstation gemäß Anspruch 1, wobei die Höhenkontrolleinheit (6) die Höhe des ringförmigen konvexen Teils in dem inneren Kreisteil so steuert, dass sie höher oder niedriger als die Höhe des ringförmigen konvexen Teils in dem äußeren Kreisteil oder gleich wie die Höhe des ringförmigen konvexen Teils in dem äußeren Kreisteil ist.

4. Korrekturstation gemäß irgendeinem der Ansprüche 1 bis 3, wobei der ringförmige konvexe Teil in dem äußeren Kreisteil einen Radius hat, der um 1,5 mm oder mehr geringer ist als der Radius des Substrates (ii).

5. Korrekturstation gemäß irgendeinem der Ansprüche 1 bis 4, wobei die Fixiereinheit (10, 11) in befestigbarer und lösbarer Weise an der Korrekturstation (8) angebracht ist.

6. Korrekturstation gemäß irgendeinem der Ansprüche 1 bis 5, wobei die Fixiereinheit (10, 11) eine Vakuum ansaugende Fixiereinheit ist, konfiguriert den inneren Kreisteil des Substrates durch Vakuum anzusaugen und den inneren Kreisteil des Substrates (ii) an dem konvexen Teil in dem inneren Kreisteil zu fixieren.

7. Korrekturstation gemäß irgendeinem der Ansprüche 1 bis 5, wobei die Fixiereinheit (10, 11) eine Gewichts-fixierende Fixiereinheit ist, konfiguriert den inneren Kreisteil des Substrates durch das Gewicht anzupressen und den inneren Kreisteil des Substrates (ii) an dem konvexen Teil in dem inneren Kreisteil zu fixieren.

8. Korrekturstation gemäß irgendeinem der Ansprüche 1 bis 5, wobei die Fixiereinheit (10, 11) eine mittels eines Buckelteils einklemmende Einheit ist, konfiguriert eine Wurzel des Buckelteils der Korrektureinheit, welche sich höher als das Substrat erhebt, nach Anpressen des inneren Kreisteils des Substrates an den konvexen Teil in dem inneren Kreisteil einzuklemmen.

9. Korrekturstation gemäß irgendeinem der Ansprüche 1 bis 8, wobei die Höhenkontrolleinheit (6) mindestens ein Ring zum Verändern der Höhe des konvexen Teils in dem äußeren Kreisteil ist.

10. Korrekturstation gemäß Anspruch 9, wobei der Ring (6a, 6b) zum Verändern der Höhe des konvexen Teils in dem äußeren Kreisteil in befestigbarer und lösbarer Weise an der Korrekturstation (8) angebracht ist.

11. Korrekturstation gemäß irgendeinem der Ansprüche 9 bis 10, wobei die Höhe des Rings (6a, 6b) zum Verändern der Höhe des konvexen Teils in dem äußeren Kreisteil von einer Höhe, welche um 0,3 mm niedriger als die Höhe des konvexen Teils in dem äußeren Kreisteil ist, bis zu einer Höhe, welche um 0,3 mm höher als die Höhe des konvexen Teils in dem äußeren Kreisteil ist, verändert wird.

12. Korrekturstation gemäß irgendeinem der Ansprüche 1 bis 11, wobei das Substrat (ii) ein Substrat für Information ist, umfassend mindestens die Aufzeichnungsschicht auf dem Substrat.

13. Korrekturstation gemäß irgendeinem der Ansprüche 1 bis 12, wobei die Korrekturstation (8) eine Steuereinheit umfasst, die konfiguriert ist, den Oberflächen-Andruck des Substrates (ii) zum Korrigieren der Durchbiegung des Substrates zu steuern.

14. Korrekturstation gemäß Anspruch 13, wobei die zum Steuern des Oberflächen-Andrucks des Substrates konfigurierte Steuereinheit das Substrat an dem konvexen Teil in dem inneren Kreisteil adsorbiert.

15. Korrekturstation gemäß irgendeinem der Ansprüche 13 bis 14, wobei mindestens eine der zum Steuern des Oberflächen-Andrucks des Substrates konfigurierte Steuereinheiten sich in dem äußeren Kreisteil befindet.

16. Laminiervorrichtung zum Herstellen eines Aufzeichnungsmediums, umfassend zwei zu laminierende Substrate (106, 107),
wobei die Vorrichtung umfasst:
eine Beschichtungseinheit (110), konfiguriert, mindestens eines der beiden Substrate mit einem UV-härtenden Klebstoff zu beschichten,
eine Übereinanderlegeinheit (12), konfiguriert ein Substrat unter den beiden Substraten so über das andere Substrat unter den beiden Substraten zu legen, dass der Klebstoff zwischen die beiden Substrate verbracht wird,
eine Entfernungseinheit (13, 50), konfiguriert überschüssigen Klebstoff zu entfernen, mittels welcher die übereinander gelegten Substrate in Rotation versetzt werden, um die Klebstoffschicht anzuordnen, indem der Klebstoff unter Verwendung der Zentrifugalkraft der Rotation gespreitet wird und überschüssiger Klebstoff entfernt wird,
eine Härtungseinheit, konfiguriert die Klebschicht durch Einstrahlung von ultraviolettem Licht zu härten, und
die Korrekturstation (8) gemäß irgendeinem der Ansprüche 1 bis 15.

17. Laminierverfahren zum Herstellen eines Aufzeichnungsmediums, umfassend zwei Substrate, welche laminiert werden, wobei das Verfahren umfasst:
Beschichten von mindestens einem der beiden Substrate mit einem Ultraviolett-härtenden Klebstoff,
Übereinanderlegen von einem Substrat unter den beiden Substraten so über das andere Substrat unter den beiden Substraten, dass der Klebstoff zwischen die beiden Substrate verbracht wird,
Entfernen von überschüssigem Klebstoff, indem die übereinander gelegten Substrate in Rotation versetzt werden, um nicht nur die Klebstoffschicht anzuordnen, indem der Klebstoff unter Verwendung der Zentrifugalkraft der Rotation gespreitet wird, sondern auch um einen Überschuss von Klebstoff zu entfernen, und
Härten der Klebstoffschicht durch Einstrahlen von ultraviolettem Licht,
wobei die Korrekturstation gemäß irgendeinem der Ansprüche 1 bis 15 verwendet wird.

18. Aufzeichnungsmedium vom Laminattyp, umfassend zwei Substrate mit einem gehärteten Klebstoff dazwischen, wobei das Aufzeichnungsmedium mit einem Laminierverfahren für das Aufzeichnungsmedium gemäß Anspruch 17 hergestellt wird.

19. Aufzeichnungsmedium vom Laminattyp gemäß Anspruch 18, wobei das Aufzeichnungsmedium eine Beschleunigung in der Richtung der Rotationsachse von 2,1 m/s² oder weniger hat.

20. Aufzeichnungsmedium vom Laminattyp gemäß Anspruch 18, wobei das Aufzeichnungsmedium einen Wert der radialen Schrägstellung in dem Bereich von -0,6° bis +0,6° aufweist.

## Revendications

1. Etage correcteur (8) comprenant :
des parties convexes annulaires (i) dans une partie cercle intérieur et dans une partie cercle extérieur de l'étage correcteur qui soutiennent un substrat,
une unité de régulation de hauteur (6) configurée pour réguler la hauteur de la partie convexe annulaire dans la partie cercle intérieur et la hauteur de la partie convexe annulaire dans la partie cercle extérieur, et
une unité de fixation (10, 11) configurée pour fixer la partie cercle intérieur du substrat par pression afin de corriger le gauchissement du substrat,
dans lequel le rayon de l'unité de régulation de hauteur est inférieur au rayon du substrat (ii).

2. Etage correcteur selon la revendication 1,
dans lequel l'unité de régulation de hauteur (6) régule la hauteur de la partie convexe annulaire dans la partie cercle extérieur pour qu'elle soit supérieure ou inférieure à la hauteur de la partie convexe annulaire dans la partie cercle intérieur.

3. Etage correcteur selon la revendication 1,
dans lequel l'unité de régulation de hauteur (6) régule la hauteur de la partie convexe annulaire dans la partie cercle intérieur pour qu'elle soit supérieure ou inférieure à la hauteur de la partie convexe annulaire dans la partie cercle extérieur, ou égale à la hauteur de la partie convexe annulaire dans la partie cercle extérieur.

4. Etage correcteur selon l'une quelconque des revendications 1 à 3,
dans lequel la partie convexe annulaire dans la partie cercle extérieur a un rayon inférieur au rayon du substrat (ii) de 1,5 mm ou plus.

5. Etage correcteur selon l'une quelconque des revendications 1 à 4,
dans lequel l'unité de fixation (10, 11) est fixée à l'étage correcteur (8) de manière attachable et détachable.

6. Etage correcteur selon l'une quelconque des revendications 1 à 5,
dans lequel l'unité de fixation (10, 11) est une unité de fixation par aspiration sous vide configurée pour aspirer la partie cercle intérieur du substrat par le vide et pour fixer la partie cercle intérieur du substrat (ii) à la partie convexe dans la partie cercle intérieur.

7. Etage correcteur selon l'une quelconque des revendications 1 à 5,
dans lequel l'unité de fixation (10, 11) est une unité de fixation de poids configurée pour presser la partie cercle intérieur du substrat par le poids et pour fixer la partie cercle intérieur du substrat (ii) à la partie convexe dans la partie cercle intérieur.

8. Etage correcteur selon l'une quelconque des revendications 1 à 5,
dans lequel l'unité de fixation (10, 11) est une unité de blocage de partie bossage configurée pour bloquer une base de la partie bossage de l'étage correcteur qui s'élève plus haut que le substrat après pressage de la partie cercle intérieur du substrat vers la partie convexe dans la partie cercle intérieur.

9. Etage correcteur selon l'une quelconque des revendications 1 à 8,
dans lequel l'unité de régulation de hauteur (6) est au moins un anneau destiné à faire varier la hauteur de la partie convexe dans la partie cercle extérieur.

10. Etage correcteur selon la revendication 9,
dans lequel l'anneau (6a, 6b) destiné à faire varier la hauteur de la partie convexe dans la partie cercle extérieur est attaché à l'étage correcteur (8) de manière attachable et détachable.

11. Etage correcteur selon l'une quelconque des revendications 9 à 10,
dans lequel la hauteur de l'anneau (6a, 6b) destiné à faire varier la hauteur de la partie convexe dans la partie cercle extérieur varie entre une hauteur qui est inférieure de 0,3 mm à la hauteur de la partie convexe dans la partie cercle intérieur et une hauteur qui est supérieure de 0,3 mm à la hauteur de la partie convexe dans la partie cercle intérieur.

12. Etage correcteur selon l'une quelconque des revendications 1 à 11,
dans lequel le substrat (ii) est un substrat pour l'information comprenant au moins la couche d'enregistrement sur le substrat.

13. Etage correcteur selon l'une quelconque des revendications 1 à 12,
dans lequel l'étage correcteur (8) comprend une unité de régulation configurée pour réguler la pression de surface du substrat (ii) pour corriger le gauchissement du substrat.

14. Etage correcteur selon la revendication 13,
dans lequel l'unité de régulation configurée pour réguler la pression de surface du substrat adsorbe le substrat au niveau de la partie convexe dans la partie cercle intérieur.

15. Etage correcteur selon l'une quelconque des revendications 13 à 14,
dans lequel au moins l'unité de régulation configurée pour réguler la pression de surface du substrat est positionnée dans la partie cercle extérieur.

16. Appareil de stratification destiné à produire un support d'enregistrement comprenant deux substrats (106, 107) qui sont à stratifier,
l'appareil comprenant :
une unité de revêtement (110) configurée pour revêtir au moins l'un des deux substrats d'un adhésif durcissant à la lumière ultraviolette,
une unité de superposition (12) configurée pour superposer les deux substrats l'un sur l'autre de sorte que l'adhésif soit placé entre les deux substrats,
une unité de retrait (13, 50) configurée pour retirer un surplus d'adhésif grâce à quoi les substrats superposés tournent pour disposer la couche adhésive par pulvérisation de l'adhésif à l'aide de la force centrifuge de la rotation et un surplus d'adhésif est retiré,
une unité de durcissement configurée pour durcir la couche adhésive par rayonnement d'une lumière ultraviolette et
l'étage correcteur (8) selon l'une quelconque des revendications 1 à 15.

17. Procédé de stratification destiné à produire un support d'enregistrement comprenant deux substrats qui sont stratifiés, le procédé comprenant :
le revêtement d'au moins l'un des deux substrats à l'aide d'un adhésif durcissant à la lumière ultraviolette,
la superposition des deux substrats l'un sur l'autre de sorte que l'adhésif soit placé entre les deux substrats,
le retrait d'un surplus d'adhésif grâce auquel les substrats superposés tournent non seulement pour disposer la couche adhésive par pulvérisation de l'adhésif à l'aide de la force centrifuge de la rotation, mais également pour retirer un surplus d'adhésif, et
le durcissement de la couche adhésive par rayonnement d'une lumière ultraviolette,
dans lequel l'étage correcteur selon l'une quelconque des revendications 1 à 15 est utilisé.

18. Support d'enregistrement de type stratifié comprenant deux substrats, un adhésif durci étant disposé entre eux, le support d'enregistrement étant produit par un procédé de stratification destiné au support d'enregistrement selon la revendication 17.

19. Support d'enregistrement de type stratifié selon la revendication 18,
dans lequel le support d'enregistrement présente une accélération dans la direction de l'axe de rotation de 2,1 m/s² ou moins.

20. Support d'enregistrement de type stratifié selon la revendication 18,
dans lequel le support d'enregistrement présente une valeur d'inclinaison R comprise entre -0,6° et +0,6°.
